# EUROPÄISCHE PATENTSCHRIFT

(11) **EP 3 836 139 B1**
(45) Veröffentlichungstag und Bekanntmachung des Hinweises auf die Patenterteilung: **07.06.2023**
(21) Anmeldenummer: 20206003.4
(22) Anmeldetag: 05.11.2020
(51) Int. Cl.: G10L 17/02, H04R 25/00

(54) **VERFAHREN, BEI WELCHEM ZWEI HÖRGERÄTE MITEINANDER GEKOPPELT WERDEN, SOWIE HÖRGERÄT**
HEARING AID AND METHOD FOR COUPLING TWO HEARING AIDS TOGETHER
PROCÉDÉ D'ACCOUPLEMENT DE DEUX APPAREILS AUDITIFS AINSI QU'APPAREIL AUDITIF

(30) Priorität: 12.12.2019 DE 102019219510
(43) Veröffentlichungstag der Anmeldung: 16.06.2021
(73) Patentinhaber: Sivantos Pte. Ltd., Singapore 539775 (SG)
(72) Erfinder: GÖKAY, Umut, 53639 Königswinter (DE)
(74) Vertreter: FDST Patentanwälte

(56) Entgegenhaltungen:
- US-A1- 2008 057 868

## Beschreibung

Die Erfindung betrifft ein Verfahren, bei welchem zwei Hörgeräte miteinander gekoppelt werden, sowie zwei entsprechende Hörgeräte.

Ein Hörgerät ist üblicherweise einem einzelnen Nutzer zugeordnet und wird von diesem im oder am Ohr getragen, um Schall aus der Umgebung aufzunehmen und modifiziert wieder auszugeben. Hierzu weist das Hörgerät ein Mikrofon auf, welches Schall aufnimmt und ein elektrisches Eingangssignal erzeugt. Dieses wird zur Modifikation einer Signalverarbeitung des Hörgeräts zugeführt. Die Signalverarbeitung gibt als Ergebnis ein elektrisches Ausgangssignal aus, welches dann über einen Hörer des Hörgeräts wieder in Schall umgewandelt und an den Nutzer ausgegeben wird.

Treffen mehrere Nutzer mit jeweils einem Hörgerät an einem Ort zusammen, ist es unter Umständen sinnvoll, dass die Hörgeräte sich in einem Netzwerk miteinander verbinden, um Daten auszutauschen. Hörgeräte unterschiedlicher Nutzer, welche gemeinsam in einem Netzwerk verbunden sind, sind beispielsweise beschrieben in EP 1 643 801 A2 und EP 3 101 919 A1.

Zum Datenaustausch müssen die Hörgeräte miteinander gekoppelt werden, sodass ein Netzwerk gebildet ist, in welchem die Hörgeräte dann Daten miteinander austauschen können.

In der US 2008/057868 A1 wird ein Verfahren zum Paaren von zwei Geräten eines drahtlosen Nahbereichskommunikationsnetzwerks beschrieben, umfassend: Konfigurieren einer drahtgebundenen und drahtlosen automatischen Paarung der beiden Geräte an jedem Gerät der beiden Geräte; Bestimmen, ob die konfigurierten zwei Geräte physisch miteinander gekoppelt sind; und Durchführen einer Paarung zwischen den beiden Geräten, wenn festgestellt wird, dass die beiden Geräte physisch miteinander gekoppelt sind.

Vor diesem Hintergrund ist es eine Aufgabe der Erfindung, eine Kopplung von Hörgeräten miteinander in einem gemeinsamen Netzwerk auf möglichst einfache und zuverlässige Weise zu ermöglichen. Mehrere Hörgeräte sollen möglichst interaktionsfrei miteinander gekoppelt werden, d.h. soweit wie möglich automatisch und ohne einen Eingriff der Nutzer zu erfordern.

Die Aufgabe wird erfindungsgemäß gelöst durch ein Verfahren mit den Merkmalen gemäß Anspruch 1 sowie durch ein erstes Hörgerät und ein zweites Hörgerät mit den Merkmalen gemäß Anspruch 12. Vorteilhafte Ausgestaltungen, Weiterbildungen und Varianten sind Gegenstand der Unteransprüche. Dabei gelten die Ausführungen im Zusammenhang mit dem Verfahren sinngemäß auch für das Hörgerät und umgekehrt. Sofern nachfolgend Verfahrensschritte beschrieben werden, ergeben sich vorteilhafte Ausgestaltungen für die Hörgeräte insbesondere dadurch, dass dieses ausgebildet ist, einen oder mehrere dieser Verfahrensschritte auszuführen.

Das Verfahren dient insbesondere zur Kopplung mehrerer Hörgeräte miteinander in einem gemeinsamen Netzwerk. Allgemein ist ein erstes Hörgerät einem ersten Nutzer zugeordnet und ein zweites Hörgerät ist einem anderen, zweiten Nutzer zugeordnet. Bei dem Verfahren sendet das erste Hörgerät als eine Kopplungsanfrage eine erste akustische ID einer Stimme des ersten Nutzers aus. Das zweite Hörgerät empfängt die erste akustische ID und vergleicht diese mit einer zweiten akustischen ID. Das zweite Hörgerät sendet dann eine Kopplungsannahme aus, falls die erste akustische ID mit der zweiten akustischen ID übereinstimmt, sodass das erste Hörgerät mit dem zweiten Hörgerät gekoppelt wird, zum Datenaustausch zwischen diesen beiden Hörgeräten.

Relativ zu einem jeweiligen Hörgerät wird diejenige akustische ID, welche zum Nutzer dieses Hörgeräts gehört, auch als "eigene akustische ID" bezeichnet. Demgegenüber wird relativ zu einem jeweiligen Hörgerät diejenige akustische ID, welche zu einem Nutzer eines anderen Hörgeräts gehört, auch als "fremde akustische ID" bezeichnet. Demnach ist die oben genannte erste akustische ID für das erste Hörgerät eine eigene akustische ID, für das zweite Hörgerät jedoch eine fremde akustische ID. Die oben genannte zweite akustische ID ist für das erste Hörgerät eine fremde oder eine eigene akustische ID, je nachdem, ob der Nutzer zu dieser akustischen ID derselbe ist oder nicht. Für das zweite Hörgerät ist die zweite akustische ID in jedem Fall aber eine fremde akustische ID.

Vorliegend wird zur Veranschaulichung des Verfahrens zwischen einem ersten und einem zweiten Hörgerät unterschieden. Deren Rollen im Verfahren sind jedoch grundsätzlich austauschbar. Die beiden Hörgeräte müssen auch nicht zwingend unterschiedlich oder gleichartig sein. Die Ausführungen zum ersten Hörgerät gelten daher sinngemäß, jedoch nicht zwingend, auch für das zweite Hörgerät und umgekehrt.

Eine akustische ID dient allgemein zur möglichst eindeutigen Identifikation eines jeweiligen Nutzers. Die akustische ID wird daher auch als akustischer Fingerabdruck bezeichnet, um auszudrücken, dass die akustische ID für jeden Nutzer individuell ist. Eine jeweilige akustische ID ist insbesondere immer aus einer Stimme erzeugt, d.h. basiert auf einem tatsächlichen Schallsignal. Nachfolgend wird die akustische ID vereinfachend auch lediglich als ID bezeichnet. Die ID ist insbesondere eine Identifikationsmarke, welche Informationen über die Eigenschaften der Stimme eines jeweiligen Nutzers enthält. In einer geeigneten Ausgestaltung ist die ID eine Liste von Werten mehrerer Stimmparameter eines Nutzers. Da die Stimme individuell ist, ist auch die ID entsprechend individuell und ermöglicht eine besonders zuverlässige Identifikation eines Nutzers. Indem das zweite Hörgerät die erste und die zweite akustische ID miteinander vergleicht, wird eine Identifikation des ersten Nutzers durch das zweite Hörgerät ermöglicht und bei einer Übereinstimmung dieser Nutzer entsprechend erfolgreich identifiziert. Die erste ID wird daher in diesem Zusammenhang auch als Ist-ID bezeichnet, d.h. als ID, welche tatsächlich vorliegt. Die zweite ID wird entsprechend auch als Soll-ID bezeichnet, d.h. als ID, welche zur erfolgreichen Identifikation erwartet wird. Beim Vergleichen der IDs ist eine vollständige Übereinstimmung nicht unbedingt notwendig, vielmehr ist eine hinreichende Übereinstimmung innerhalb eines Toleranzbereichs typischerweise bereits geeignet.

Das Aussenden der Kopplungsanfrage des ersten Hörgeräts ist nicht zwingend direkt auf das zweite Hörgerät gerichtet und hängt auch nicht zwingend vom Vorhandensein eines weiteren Hörgeräts in der Umgebung ab. Die Kopplungsanfrage und somit das Aussenden der ersten ID ist in einer grundsätzlich geeigneten Ausgestaltung entsprechend ungerichtet. Allgemein erfolgt das Aussenden der Kopplungsanfrage in einem Anfragemodus oder Broadcast-Modus des ersten Hörgeräts an alle potentiell in der Umgebung befindlichen Hörgeräte. Das Empfangen der Kopplungsanfrage durch das zweite Hörgerät erfolgt insbesondere in einem Annahmemodus oder Listening-Modus des zweiten Hörgeräts, d.h. das zweite Hörgerät sucht die Umgebung nach Kopplungsanfragen anderer Hörgeräte ab. Anfrage- und Annahmemodus können bei einem einzelnen Hörgerät grundsätzlich auch gleichzeitig aktiv sein.

Beide Hörgeräte weisen zum Datenaustausch miteinander und allgemein zur Kommunikation jeweils eine Schnittstelle auf. Über die Schnittstelle werden die IDs ausgesendet und empfangen und nach erfolgter Kopplung dann auch andere Daten übermittelt, vorzugsweise Audiodaten, Einstellungsparameter, andere Daten oder eine Kombination hiervon. Die jeweilige Schnittstelle weist üblicherweise eine begrenzte Reichweite auf, z.B. maximal 10 m, sodass eine Kopplung automatisch lediglich in einem räumlich begrenzten Umfeld des jeweiligen Hörgeräts durchgeführt wird. Zwei Hörgeräte werden demnach lediglich dann miteinander gekoppelt, wenn diese sich in Reichweite zueinander befinden, d.h. in räumlicher Nähe zueinander, sodass sichergestellt ist, dass die Kopplung auch von den beiden Nutzern gewollt ist und für diese auch relevant ist. Falls dagegen kein anderes Hörgerät in Reichweite ist, geht eine Kopplungsanfrage des ersten Hörgeräts ins Leere, ist also erfolglos.

Ein Vorteil der Erfindung besteht insbesondere darin, dass durch das Vergleichen der akustischen IDs und die davon abhängige Kopplung mehrere Hörgeräte besonders einfach und zuverlässig miteinander gekoppelt werden und dann ein gemeinsames Netzwerk zum Datenaustausch untereinander bilden. Vorliegend wird exemplarisch lediglich die Kopplung zweier Hörgeräte beschrieben, das Konzept ist jedoch grundsätzlich auf beliebig viele Hörgeräte anwendbar. Durch die Verwendung der besonders individuellen akustischen ID ist auch gewährleistet, dass bei der Kopplung die richtigen Kopplungspartner, d.h. Nutzer, miteinander verbunden werden. Dies ist besonders vorteilhaft in Situationen, in welchen mehrere Nutzer jeweils mit einem Hörgerät zusammenkommen und in welchen eine Auswahl gefordert ist, da ein jeweiliger Nutzer nicht zwingend mit jedem anderen Nutzer in der Umgebung verbunden sein will. Als Beispiel sei ein Gespräch zwischen zwei Hörgeräteträgern mit weiteren umstehenden Hörgeräteträgern genannt. In einer solchen Situation möchte ein Nutzer typsicherweise vorrangig mit einem bestimmten Gesprächspartner verbunden werden, d.h. einem Nutzer, mit welchem ein Gespräch erfolgt, nicht jedoch mit anderen Nutzern. Durch die Verwendung akustischer IDs zur Kopplung, erfolgen eine gezielte Identifikation, Auswahl und Kopplung mit solchen relevanten Kopplungspartnern.

Die zweite akustische ID ist im zweiten Hörgerät entweder bereits in einem Speicher des zweiten Hörgeräts hinterlegt oder wird im Rahmen des Verfahren erzeugt, insbesondere von dem zweiten Hörgerät. Sofern die zweite ID während des Verfahrens erzeugt wird, erfolgt dies geeigneterweise dann, wenn eine Kopplungsanfrage empfangen wird oder wenn eine Stimme in der Umgebung erkannt wird. Beide Ausgestaltungen sind auch kombinierbar.

In einer besonders bevorzugten Ausgestaltung weist das zweite Hörgerät ein Mikrofon auf und nimmt mit diesem eine Stimme aus der Umgebung auf und erzeugt daraus die zweite akustische ID. Die Stimme ist zunächst eine beliebige Stimme in der Umgebung, jedoch nicht die Stimme des zweiten Nutzers. Entsprechend ist die Stimme, welche vom zweiten Hörgerät aufgenommen wird eine fremde Stimme, d.h. entweder die Stimme des ersten Nutzers, sofern dieser in Reichweite des Mikrofons ist, oder eine andere Stimme. Wesentlich ist insbesondere, dass das zweite Hörgerät die Umgebung vorzugsweise wiederkehrend, nach Stimmen anderer Nutzer absucht. Sobald eine Stimme gefunden wird, wird hiervon zweckmäßigerweise direkt eine akustische ID erzeugt, zur späteren Verwendung beim Koppeln. Insbesondere sammelt ein jeweiliges Hörgerät auf diese Weise mit der Zeit mehrere fremde IDs, welche dann mit einer gegebenenfalls empfangenen ID verglichen werden.

Ein besonderer Vorteil des Aufnehmens der zweiten ID mit dem Mikrofon und des Sendens der ersten ID über die Schnittstellen der Hörgeräte ist nun, dass zwei unterschiedliche Übertragungskanäle zur Identifikation eines Nutzers verwendet werden. Einerseits übermittelt das erste Hörgerät eine ID des ersten Nutzers über eine Signalstrecke, indem die erste ID, d.h. die eigene ID, über die Schnittstelle an andere Hörgeräte in der Umgebung gesendet wird. Andererseits erzeugt das zweite Hörgerät eine ID eines Nutzers über eine Luftstrecke, indem die Stimme dieses Nutzers, welche ein akustische Signal ist, mit einem Mikrofon aufgenommen wird und dann die zweite akustische ID erzeugt wird, d.h. eine fremde ID. Vorliegend wird somit unterschieden zwischen einer Übertragung von Schall, d.h. einem akustischen Signal, über eine Luftstrecke einerseits und einer Übertragung eines insbesondere elektromagnetischen Signals über eine Signalstrecke andererseits. Die Signalstrecke ist in einer Ausgestaltung drahtlos, erfolgt also ebenfalls über Luft, wesentlich ist jedoch das unterschiedliche Format der Information zur Stimme eines Nutzers, nämlich ein akustisches Signal einerseits und ein elektromagnetisches Signal andererseits. Das zweite Hörgerät vergleicht schließlich die beiden IDs, welche aus unterschiedlichen Übertragungskanälen gewonnen wurden, um den ersten Nutzer zu identifizieren. Eine Interaktion der Nutzer hierbei ist vorteilhaft nicht notwendig und erfolgt vorzugsweise auch nicht, vielmehr wird das gesamte Verfahren automatisch von den Hörgeräten durchgeführt.

Nachdem die beiden Hörgeräte miteinander gekoppelt worden sind, ist ein Datenaustausch möglich. In einer bevorzugten Ausgestaltung werden beim Datenaustausch die Stimmen der Nutzer übertragen, vorzugsweise ist hierdurch eine Funkverbindung ausgebildet. Mit anderen Worten: ein jeweiliges Hörgerät weist ein Mikrofon auf, mit welchem die Stimme des eigenen Nutzers aufgenommen wird. Das Mikrofon erzeugt ein entsprechendes Audiosignal, welches je nach Ausgestaltung noch zusätzlich bearbeitet wird oder nicht und dann über die Schnittstelle an das andere Hörgerät übermittelt wird. Das andere Hörgerät empfängt die Stimme des nun anderen Nutzers und wandelt diese mittels eines Hörers wieder in Schall um, zur Ausgabe an den eigenen Nutzer. Dies erfolgt insbesondere in beiden Richtungen, sodass die Nutzer über das Netzwerk miteinander sprechen können. Die Luftstrecke zwischen den beiden Nutzern wird dadurch umgangen, was speziell in lauten oder gestörten Umgebungen vorteilhaft ist.

Das Aussenden der Kopplungsanfrage mit der ersten und eigenen ID ist an sich unabhängig von der Anwesenheit des zweiten und generell eines anderen Nutzers. Zweckmäßigerweise wird jedoch die Kopplungsanfrage speziell und vorteilhafterweise lediglich dann ausgesendet, wenn das erste Hörgerät erkennt, dass ein zweites Hörgerät in Reichweite ist. In einer besonders bevorzugten Ausgestaltung sendet das erste Hörgerät die erste akustische ID aus, wenn das erste Hörgerät eine Gesprächssituation erkennt. Unter einer Gesprächssituation wird insbesondere verstanden, dass wenigstens zwei Personen, insbesondere Nutzer von Hörgeräten, miteinander sprechen, typischerweise wechselseitig. Wenn also das erste Hörgerät die Anwesenheit eines anderen Nutzers in der Umgebung erkennt, dann wird hierdurch der Anfragemodus aktiviert und die erste, eigene ID ausgesendet. Dadurch wird sichergestellt, dass die erste ID nur dann ausgesendet wird, wenn auch tatsächlich ein potentieller Kopplungspartner vorhanden ist. Möglicherweise trägt der Gesprächspartner aber kein Hörgerät. Dann geht die Kopplungsanfrage ins Leere.

Um die Anwesenheit eines anderen Nutzers zu erkennen, ist ein jeweiliges Hörgerät zweckmäßigerweise ausgebildet, eine fremde Stimme zu erkennen. Hierzu weist das Hörgerät ein Mikrofon und eine Stimmanalyseeinheit auf. Mit dem Mikrofon nimmt das Hörgerät Schall aus der Umgebung auf, erzeugt daraus ein Eingangssignal und führt dieses der Stimmanalyseeinheit zu. Diese erkennt dann, ob eine fremde Stimme in der Umgebung vorhanden ist oder nicht. Hierzu wird zweckmäßigerweise und sofern vorhanden zunächst eine Stimme in dem Schall erkannt und hiervon eine akustische ID erzeugt. Diese wird dann beispielsweise mit der akustischen ID des dem Hörgerät zugeordneten Nutzers, d.h. der eigenen ID, verglichen. Die eigene ID ist insbesondere in dem Hörgerät gespeichert oder wird von diesem erzeugt. Vorzugsweise dient die Stimmanalyseeinheit auch dazu, die eigene Stimme des Nutzers aufzunehmen und daraus eine akustische ID zu erzeugen. Diese Funktionen sind alternativ durch voneinander separate Stimmanalyseeinheiten realisiert. Sind nun in einem gegebenen Zeitraum mehrere unterschiedliche Stimmen, d.h. auch unterschiedliche IDs, vorhanden, dann liegt eine Gesprächssituation vor.

Möglicherweise sind mehrere fremde Stimmen vorhanden und nicht mit allen der zugehörigen Nutzer soll ein Gespräch erfolgen. Mit anderen Worten: möglicherweise ist die Gesprächssituation auf eine Teilmenge von Nutzern in der Umgebung beschränkt. Typischerweise besteht eine Gesprächssituation nur mit solchen fremden Nutzern, welche frontal zum Nutzer positioniert sind, sich diesem also gegenüber befinden. In einer vorteilhaften Ausgestaltung nimmt daher das zweite Hörgerät für die zweite akustische ID eine Stimme lediglich aus einem Teilbereich der Umgebung auf, nämlich aus einem Teilbereich, in welchem sich potentiell ein Gesprächspartner des zweiten Nutzers aufhält. Dieser Teilbereich ist allgemein ein begrenzter Raumbereich um den Nutzer herum. In einer geeigneten Ausgestaltung ist der Teilbereich eine bezüglich des zweiten Nutzers vordere Raumhälfte oder ein vorderes Raumviertel. Geeignet ist auch eine Ausgestaltung, bei welcher der Teilbereich eine Richtkeule eines Beamformers des zweiten Hörgeräts ist. Insgesamt erfolgt also die Kopplung der Hörgeräte richtungsabhängig, um weiter sicherzustellen, dass zwei Hörgeräte nur dann gekoppelt werden, wenn deren Nutzer auch miteinander sprechen wollen. Dies ist regelmäßig der Fall, wenn sich die Nutzer frontal gegenüber stehen, oder wenn ein Beamformer eines Hörgeräts auf einen Nutzer ausgerichtet ist und diesen gegebenenfalls auch verfolgt.

Eine erfolgreiche Kopplung der beiden Hörgeräte bedingt geeigneterweise das Aussenden der Kopplungsanfrage durch das erste Hörgerät, deren Empfang durch das zweite Hörgerät und umgekehrt das Aussenden der Kopplungsannahme durch das zweite Hörgerät und deren Empfang durch das erste Hörgerät. Damit ist zumindest der erste Nutzer identifiziert. Zweckmäßigerweise werden für die Kopplung dieselben Schritte zusätzlich auch umgekehrt ausgeführt, um analog auch den zweiten Nutzer zu identifizieren. In einer geeigneten Ausgestaltung enthält die Kopplungsannahme des zweiten Hörgeräts hierzu eine Kopplungsanfrage an das erste Hörgerät. Diese Kopplungsanfrage umfasst eine eigene akustische ID des zweiten Nutzers, welche - analog zur ersten ID - vom ersten Hörgerät empfangen wird und - analog zur zweiten ID - mit einer gespeicherten fremden akustischen ID verglichen wird. Die Hörgeräte führen also insgesamt einen wechselseitigen Vergleich der IDs der beiden Nutzer aus. Das erste Hörgerät sendet dann an das zweite Hörgerät ebenfalls eine Kopplungsannahme, falls die akustische ID des zweiten Nutzers mit der gespeicherten akustischen ID übereinstimmt. In einer Ausgestaltung wird die gespeicherte akustische ID mit einer Stimmanalyseeinheit des Hörgeräts aus Schall der Umgebung erzeugt, wie oben bereits beschrieben wurde. Kurz gesagt: die Hörgeräte führen eine wechselseitige Identifikation ihrer Nutzer durch, d.h. eine bidirektionale Identifikation. Dadurch ist die resultierende Kopplung besonders zuverlässig.

Eine beispielhafte Anwendung einer Ausführungsform des Verfahrens soll nachfolgend näher beschrieben werden: zwei Nutzer mit je einem Hörgerät nähern sich einander an und beginnen sich miteinander zu unterhalten. Ein erstes der beiden Hörgeräte erkennt mittels eines Mikrofons, dass ein anderer Nutzer, d.h. ein zweiter Nutzer, in der Umgebung vorhanden ist und auch spricht. Dieses erste Hörgerät sendet daher die akustische ID seines eigenen Nutzers, d.h. eines ersten Nutzers, aus. Diese erste ID wird von dem zweiten Hörgerät empfangen, welches nun seinerseits mittels eines Mikrofons Schall aus der Umgebung aufnimmt und die Stimme des ersten Nutzers darin erkennt. Aus dieser Stimme wird eine akustische ID erzeugt, welche nun als zweite akustische ID bezeichnet wird, aber aufgrund der vorliegenden Situation wie die erste akustische ID eine ID des ersten Nutzers ist. Beim Vergleich der beiden IDs, d.h. der selbst erzeugten ID einerseits und der empfangenen ID andererseits, stellt nun das zweite Hörgerät fest, dass die IDs übereinstimmen und dass also das Hörgerät des ersten Nutzers zur Kopplung bereit ist, z.B. um das Gespräch mittels Datenaustausch fortzusetzen. Auf diese Feststellung hin übersendet das zweite Hörgerät an das erste Hörgerät eine Kopplungsannahme, mit deren Empfang durch das erste Hörgerät dann eine Kopplung erfolgt. Alternativ erfolgt hierdurch erst eine teilweise Kopplung und eine vollständige Kopplung erfolgt erst, nachdem umgekehrt auch das zweite Hörgerät eine selbst erzeugte ID des zweiten Nutzers, d.h. eine dritte ID, an das erste Hörgerät übersendet hat und diese von dem ersten Hörgerät mit einer von diesem erzeugten ID des zweiten Nutzers, d.h. einer vierten ID, erfolgreich verglichen worden ist.

Dabei wird diese vom ersten Hörgerät erzeugte ID des zweiten Nutzers analog dadurch erzeugt, dass das erste Hörgerät mittels eines Mikrofons Schall aus der Umgebung aufnimmt und auf darin eine Stimme erkennt.

Bevorzugterweise wird die jeweilige akustische ID basierend auf wenigstens einem Stimmparameter einer jeweiligen Stimme erzeugt und ist hierbei ausgewählt aus einer Menge von Stimmparametern, umfassend: Vokaltraktfrequenz, Lautstärke, Stimmfrequenz, Stimmanstieg, auch als Pitch bezeichnet, Geschwindigkeit, Frequenzbereich, Atmungsfrequenz, Ruhepegel, von Vokal- und Konsonantenwechsel. Die vorgenannten Stimmparameter sind besonders geeignet, um eine akustische ID zu erzeugen und verschiedene Nutzer hinreichend genau zu identifizieren und somit zu unterscheiden. Grundsätzlich ist die Verwendung eines einzelnen Stimmparameters bereits ausreichend, zweckmäßiger ist jedoch eine Kombination mehrerer Stimmparameter bei der Erzeugung einer ID. Die ID ist dann beispielsweise eine Liste von Werten der einzelnen Stimmparameter. Eine akustische ID wird somit allgemein erzeugt, indem zunächst eine Stimme erkannt wird und dann ein oder mehrere Stimmparameter dieser Stimme bestimmt werden. Gegebenenfalls werden mehrere Stimmparameter werden zu einer ID zusammengefasst.

Sämtliche der genannten Stimmparameter lassen sich auf einfache Weise aus einem Eingangssignal eines Mikrofons des jeweiligen Hörgeräts ermitteln, beispielsweise mittels einer Pegel-, Frequenz-, Spektral-, oder Zeitbereichsanalyse. Wie die einzelnen Stimmparameter konkret bestimmt werden, ist vorliegend von untergeordneter Bedeutung. Relevant ist vielmehr, dass diese Stimmparameter zur Erzeugung einer akustischen ID verwendet werden und hierzu deren jeweiliger Wert bestimmt und insbesondere gemessen wird.

Die Vokaltraktfrequenz gibt insbesondere an, welche Grundfrequenz der Stimmtrakt eines Nutzers hat. Die Vokaltraktfrequenz bildet sozusagen die Grundfrequenz der Stimmbänder, von welcher ausgehend dann eine Stimmformung erfolgt. Die Vokaltraktfrequenz charakterisiert somit die Stimme eines Nutzers. Typischerweise liegt die Vokaltraktfrequenz bei Männern im Bereich von 100 Hz und bei Frauen im Bereich von 150 Hz.

Die Lautstärke gibt insbesondere an, wie laut der jeweilige Nutzer spricht. Die Lautstärke wird vorzugsweise mit einem Pegelmesser bestimmt.

Die Stimmfrequenz gibt insbesondere an, welche Frequenz die Stimme eines Nutzers zum aktuellen Zeitpunkt aufweist. Hierbei wir zweckmäßigerweise gemittelt die Stimmfrequenz über eine kurzen Zeitraum von z.B. 1 s gemittelt. Die Stimmfrequenz wird vorzugsweise bestimmt, indem eine Mittelung der Frequenz während einer Sprechaktivität eines Nutzers erfolgt.

Der Stimmanstieg gibt insbesondere an, mit welcher Pegeländerung beim beginnen einer Sprechaktivität sich die Stimme eines Nutzers erhebt. Der Stimmanstieg wird vorzugsweise bestimmt, indem zu Beginn der Sprachaktivität die Amplitude, d.h. der Pegel, des Sprechers gemessen über einen bestimmten Zeitraum gemessen wird und deren mittlere Anstiegskurve ermittelt wird. Es wird demnach ein Pegelverlauf gemessen, geeigneterweise mittels eines Pegelmessers.

Der Vokal- und Konsonantenwechsel gibt insbesondere an, wann ein Nutzer zwischen Vokalen und Konsonante wechselt. Der Vokal- und Konsonantenwechsel wird vorzugsweise bestimmt, indem Vokale und Konsonanten in der Stimme erkannt werden und bestimmt wird, zu welchen Zeiten ein Wechsel auftritt. Äquivalent hierzu ist eine Bestimmung lediglich eines Konsonantenwechsels, d.h. ein Wechsel zwischen unterschiedlichen Konsonanten.

Die Geschwindigkeit gibt insbesondere an, wie schnell der jeweilige Nutzer spricht. Die Geschwindigkeit wird vorzugsweise bestimmt, indem der Vokal- und Konsonantenwechsel gemessen wird und daraus bestimmt wird, wie schnell dieser Vokal- und Konsonantenwechsel erfolgt, d.h. wie oft ein solcher Vokal- und Konsonantenwechsel innerhalb eines bestimmten Zeitraums erfolgt. Hierzu wird geeigneterweise die zeitliche Änderung des Frequenzspektrums des Eingangssignals untersucht.

Der Frequenzbereich gibt insbesondere an, welche Frequenzen ein Nutzer während eigener Sprechaktivität über einen bestimmten Zeitraum gemittelt mit dessen Stimme zur Kommunikation nutzt oder potentiell nutzen kann. Der Frequenzbereich wird vorzugsweise bestimmt, indem über einen bestimmten Zeitraum gemittelt wird, welche Frequenzen mit welcher Amplitude ein Nutzer verwendet. Diese Frequenzen und deren Amplituden werden zweckmäßigerweise in einem Frequenz- und Amplitudendiagramm gespeichert. Eine solche Messung erfolgt zweckmäßigerweise wiederkehrend, z.B. jede Millisekunde oder alle 100 ms.

Die Atmungsfrequenz gibt insbesondere an, wie schnell der jeweilige Nutzer atmet. Die Atmungsfrequenz wird vorzugsweise bestimmt, indem bei nicht vorhandener Sprechaktivität mit dem Mikrofon die durch Atmung erzeugten Geräusche gemessen werden. Besonders geeignet ist hierzu ein Körperschallmikrofon. Die Atmungsfrequenz wird insbesondere gemessen, indem die zeitliche Änderung, insbesondere Pegeländerung, von tieftönigen Frequenz im Frequenzspektrum des Eingangssignal analysiert wird.

Der Ruhepegel gibt insbesondere an, welche Amplitude während einer inaktiven Phase herrscht, d.h. während der Nutzer nicht spricht. Der Ruhepegel ist dabei nicht ein Pegel von Umgebungsgeräuschen, sondern derjenige Pegel, welchen ein Nutzer selbst erzeugt ohne zu sprechen, z.B. durch Atmung. Der Ruhepegel wird beispielsweise bestimmt, indem die oben beschriebene Pegeländerung zur Messung der Atmungsfrequenz zeitlich gemittelt wird.

Die erste ID, welche von dem ersten Hörgerät als Kopplungsanfrage ausgesendet wird, ist in einer geeigneten Ausgestaltung in einem Speicher des ersten Hörgeräts gespeichert. Beispielsweise wird die erste ID, d.h. die ID des Nutzers des jeweiligen Hörgeräts, im Rahmen eines Kalibrierverfahrens bestimmt und dann gespeichert.

Alternativ wird die erste akustische ID von dem ersten Hörgerät erzeugt, indem dieses die eigene Stimme des ersten Nutzers aufnimmt. Dabei bestimmt das Hörgerät auch einen oder mehrere Stimmparameter und erzeugt daraus dann die ID des eigenen Nutzers, d.h. die eigene ID. Diese wird zweckmäßigerweise auch zur späteren, erneuten Verwendung in einem Speicher des Hörgeräts gespeichert.

Vorteilhaft ist auch eine Kombination, bei welcher eine ID, welche durch das Kalibrierverfahren bestimmt worden ist, durch eine erneute Aufnahme der eigenen Stimme des Nutzers überprüft wird und gegebenenfalls aktualisiert wird.

Die Ausführungen zur Kalibrierung sowie zur Erzeugung und Speicherung der ID werden vorteilhaft auch bei dem zweiten Hörgerät angewandt, um die zweite ID zu erzeugen.

Zweckmäßigerweise wird die jeweilige fremde akustische ID in einer Kontaktdatenbank des jeweiligen Hörgeräts gespeichert. Die Kontaktdatenbank ist somit eine Art Telefonbuch und ermöglicht eine einfachere Kopplung bei einer wiederholten Kopplung der Nutzer. Die akustische ID muss dann nicht jedes Mal erneut mittels des Mikrofons und der Stimmanalyseeinheit erzeugt werden, sondern die in der Kontaktdatenbank gespeicherten IDs werden direkt mit einer empfangenen ID verglichen, um einen Nutzer zu identifizieren.

Vorzugsweise erfolgt der Datenaustausch drahtlos. In einer zweckmäßigeren Ausgestaltung weisen hierfür das erste und das zweite Hörgerät für den Datenaustausch jeweils eine Drahtlosschnittstelle auf. Die Drahtlosschnittstelle ist vorzugsweise eine Bluetooth-Schnittstelle. Der Datenaustausch erfolgt dann über eine Bluetooth-Verbindung und die Kopplung der Hörgeräte dient insbesondere dem Aufbau der Bluetooth-Verbindung und insbesondere auch der Paarung (d.h. Pairing) der Hörgeräte hierzu.

Ein erfindungsgemäßes Hörgerät ist ausgebildet zur Durchführung eines Verfahrens wie vorstehend beschrieben. Vorzugsweise weist das Hörgerät hierzu eine Steuereinheit auf. In der Steuereinheit ist das Verfahren insbesondere programmtechnisch oder schaltungstechnisch realisiert oder eine Kombination hiervon. Beispielswiese ist die Steuereinheit hierfür als ein Mikroprozessor oder als ein ASIC ausgebildet oder als eine Kombination hiervon. Insbesondere ist die beschriebene Stimmanalyseeinheit in die Steuereinheit integriert.

Das beschriebene Verfahren ist grundsätzlich auf jegliche Hörgeräte anwendbar. Besonders bevorzugt ist jedoch eine Ausgestaltung, bei welcher ein jeweiliges Hörgerät zur Versorgung eines hörgeschädigten Nutzers dient. Hierzu weist das Hörgerät ein Mikrofon auf, welches Schall aus der Umgebung aufnimmt und ein elektrisches Eingangssignal erzeugt. Dieses wird zur Modifikation einer Signalverarbeitung des Hörgeräts zugeführt. Die Signalverarbeitung ist vorzugsweise ein Teil der Steuereinheit. Die Modifikation erfolgt insbesondere anhand eines individuellen Audiogramms des Nutzers, welcher dem Hörgerät zugeordnet ist, sodass ein individuelles Hördefizit des Nutzers ausgeglichen wird. Die Signalverarbeitung gibt als Ergebnis ein elektrisches Ausgangssignal aus, welches dann über einen Hörer des Hörgeräts wieder in Schall umgewandelt wird und an den Nutzer ausgegeben wird.

Für die diversen, beschriebenen Verwendungen (z.B. Aufnahme einer eigenen oder fremden Stimme, Erkennung einer Gesprächssituation) eines Mikrofons eines Hörgeräts wird entweder immer dasselbe Mikrofon des Hörgeräts verwendet oder das Hörgerät weist mehrere Mikrofone auf, auf welche die unterschiedlichen Verwendungen aufgeteilt sind. Die Aufteilung muss dabei nicht fest sein, sondern kann auch zeitlich je nach Bedarf variieren.

Ein jeweiliges Hörgerät ist vorzugsweise ein monaurales oder ein binaurales Hörgerät. Ein binaurales Hörgerät weist zwei Einzelgeräte auf, welche vom Nutzer auf unterschiedlichen Seiten getragen werden, also jeweils im oder am linken und rechten Ohr. Ein monaurales Hörgerät weist lediglich ein Einzelgerät auf, welches vom Nutzer am oder im linken oder rechten Ohr getragen wird. Speziell bei einem binauralen Hörgerät ist eine Ausgestaltung vorteilhaft, bei welcher eines der Einzelgeräte die Schnittstelle zum Datenaustausch mit anderen Hörgeräten aufweist, wohingegen das andere Einzelgerät nicht direkt mit anderen Hörgeräten Daten austauscht, sondern mittelbar über das Einzelgerät mit der Schnittstelle am Netzwerk teilnimmt. Auf diese Weise wird im Betrieb Energie eingespart, da beide Einzelgeräte über lediglich eine Schnittstelle in das Netzwerk eingebunden sind.

Nachfolgend werden Ausführungsbeispiele der Erfindung anhand einer Zeichnung näher erläutert. Darin zeigen jeweils schematisch:
Fig. 1 ein Hörgerät,
Fig. 2 ein Verfahren,
Fig. 3 eine Erzeugung einer fremden akustischen ID,
Fig. 4 eine Gesprächssituation,
Fig. 5 eine Variante des Verfahrens aus Fig. 2,
Fig. 6 eine Erzeugung einer eigenen akustischen ID.

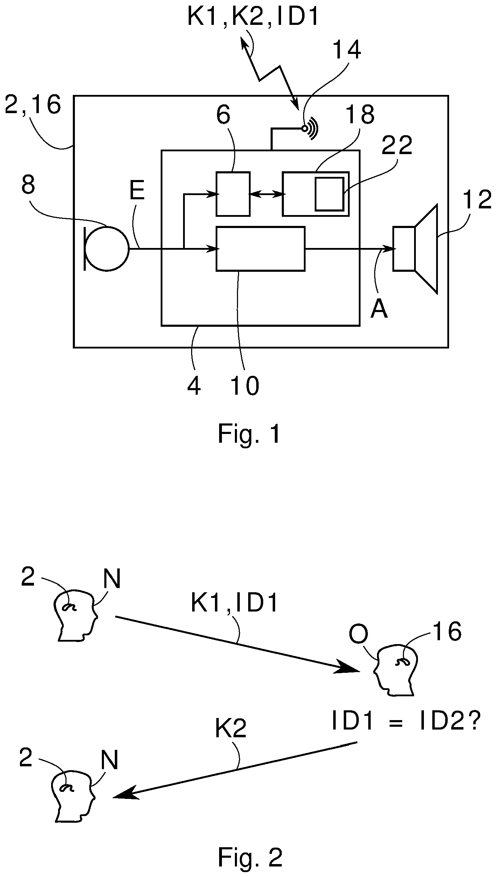

In Fig. 1 ist ein Ausführungsbeispiel eines erfindungsgemäßen Hörgeräts 2, 16 gezeigt. Dieses ist ausgebildet zur Durchführung eines Verfahrens wie nachstehend noch genauer beschrieben wird. Hierzu weist das Hörgerät 2, 16 eine Steuereinheit 4 auf. Vorliegend ist in die Steuereinheit 4 auch eine Stimmanalyseeinheit 6 integriert. Weiter dient das gezeigte Hörgerät 2, 16 auch zur Versorgung eines hörgeschädigten Nutzers N, O, was aber an sich unabhängig vom weiter unten beschriebenen Verfahren ist. Hierzu weist das Hörgerät 2 ein Mikrofon 8 auf, welches Schall aus der Umgebung aufnimmt und ein elektrisches Eingangssignal E erzeugt. In Fig. 1 ist lediglich ein einzelnes Mikrofon 8 gezeigt, geeignet ist aber auch eine Variante mit mehreren Mikrofonen 8. Das Eingangssignal E wird im gezeigten Ausführungsbeispiel zur Modifikation einer Signalverarbeitung 10 des Hörgeräts 2, 16 zugeführt. Die Signalverarbeitung 10 ist hier sogar ein Teil der Steuereinheit 4. Die Modifikation erfolgt im gezeigten Ausführungsbeispiel anhand eines individuellen Audiogramms des Nutzers N, O, welcher dem Hörgerät 2, 16 zugeordnet ist, sodass ein individuelles Hördefizit des Nutzers N, O ausgeglichen wird. Die Signalverarbeitung 10 gibt als Ergebnis ein elektrisches Ausgangssignal A aus, welches dann über einen Hörer 12 des Hörgeräts 2, 16 wieder in Schall umgewandelt wird und an den Nutzer N, O ausgegeben wird. Das Hörgerät 2, 16 ist entweder ein monaurales oder ein binaurales Hörgerät 2, 16. Das gezeigte Hörgerät 2, 16 weist außerdem zum Datenaustausch eine Schnittstelle 14 auf, welche hier allgemein eine Drahtlosschnittstelle ist.

Ein Ausführungsbeispiel eines erfindungsgemäßen Verfahrens ist in Fig. 2 dargestellt. Das Verfahren dient vorliegend zur Kopplung mehrerer Hörgeräte 2, 16 miteinander in einem gemeinsamen Netzwerk. In Fig. 2 sind beispielhaft ein erstes Hörgerät 2, welches einem ersten Nutzer N zugeordnet ist, und ein zweites Hörgerät 16, welches einem anderen, zweiten Nutzer O zugeordnet ist. Das erste und das zweite Hörgerät 2, 16 sind jeweils beispielsweise wie in Fig. 1 gezeigt ausgebildet. Die unterschiedlichen Bezugszeichen für das erste und das zweite Hörgerät 2, 16 werden vorliegend vor allem verwendet, um das erste und das zweite Hörgerät 2, 16 bei der Beschreibung des Verfahrens zu unterschieden. Die Rollen der beiden Hörgeräte 2, 16 sind aber grundsätzlich austauschbar. Die beiden Hörgeräte 2, 16 müssen auch nicht zwingend unterschiedlich oder gleichartig sein, beides ist möglich und geeignet.

In Fig. 2 ist der zeitliche Ablauf des Verfahrens von oben nach unten dargestellt. Bei dem Verfahren sendet das erste Hörgerät 2 als eine Kopplungsanfrage K1 eine erste akustische ID ID1 einer Stimme des ersten Nutzers N aus. Das zweite Hörgerät 16 empfängt die erste akustische ID ID1 und vergleicht diese mit einer zweiten akustischen ID ID2. Das zweite Hörgerät 16 sendet dann eine Kopplungsannahme K2 aus, falls die erste akustische ID IS1 mit der zweiten akustischen ID ID2 übereinstimmt, sodass das erste Hörgerät 2 mit dem zweiten Hörgerät 16 gekoppelt wird, zum Datenaustausch zwischen diesen beiden Hörgeräten 2, 16.

Relativ zu einem jeweiligen Hörgerät 2, 16 wird diejenige akustische ID ID1, ID2, ID3, ID4, welche zum Nutzer N, O dieses Hörgeräts 2 gehört, auch als "eigene akustische ID" bezeichnet. Demgegenüber wird relativ zu einem jeweiligen Hörgerät 2, 16 diejenige akustische ID ID1, ID2, ID3, ID4, welche zu einem Nutzer eines anderen Hörgeräts gehört, auch als "fremde akustische ID" bezeichnet. Demnach ist die oben genannte erste akustische ID ID1 für das erste Hörgerät 2 eine eigene akustische ID, für das zweite Hörgerät 16 jedoch eine fremde akustische ID. Die oben genannte zweite akustische ID ID2 ist für das erste Hörgerät 2 eine fremde oder eine eigene akustische ID, je nachdem, ob der Nutzer N zu dieser akustischen ID ID2 derselbe ist oder nicht. Für das zweite Hörgerät 16 ist die zweite akustische ID ID2 in jedem Fall aber eine fremde akustische ID.

Eine akustische ID ID1, ID2, ID3, ID4 dient allgemein zur möglichst eindeutigen Identifikation eines jeweiligen Nutzers N, O. Die akustische ID ID1, ID2, ID3, ID4 wird daher auch als akustischer Fingerabdruck bezeichnet, um auszudrücken, dass die akustische ID ID1, ID2, ID3, ID4 für jeden Nutzer N, O individuell ist. Nachfolgend wird die akustische ID ID1, ID2, ID3, ID4 vereinfachend auch lediglich als ID ID1, ID2, ID3, ID4 bezeichnet. Die ID ID1, ID2, ID3, ID4 ist eine Identifikationsmarke, welche Informationen über die Eigenschaften der Stimme eines jeweiligen Nutzers N, O enthält, beispielsweise ist die ID ID1, ID2, ID3, ID4 eine Liste von Werten mehrerer Stimmparameter eines Nutzers N, O. Beim Vergleichen der IDs ID1, ID2, ID3, ID4 ist eine vollständige Übereinstimmung nicht unbedingt notwendig, vielmehr ist eine hinreichende Übereinstimmung innerhalb eines Toleranzbereichs typsicherweise bereits geeignet.

Das Aussenden der Kopplungsanfrage K1 des ersten Hörgeräts 2 ist nicht zwingend direkt auf das zweite Hörgerät 16 gerichtet und hängt auch nicht zwingend vom Vorhandensein eines weiteren Hörgeräts in der Umgebung ab. Allgemein erfolgt das Aussenden der Kopplungsanfrage K1 in einem Anfragemodus oder Broadcast-Modus des ersten Hörgeräts 2 an alle potentiell in der Umgebung befindlichen Hörgeräte 16. Das Empfangen der Kopplungsanfrage K1 durch das zweite Hörgerät 16 erfolgt entsprechend in einem Annahmemodus oder Listening-Modus des zweiten Hörgeräts 16, d.h. das zweite Hörgerät 16 sucht die Umgebung nach Kopplungsanfragen K1 anderer Hörgeräte 2 ab. Anfrage- und Annahmemodus können bei einem einzelnen Hörgerät 2, 16 grundsätzlich auch gleichzeitig aktiv sein.

Über die jeweilige Schnittstelle 14 werden die IDs ID1, ID3 ausgesendet und empfangen und nach erfolgter Kopplung dann auch andere Daten übermittelt, beispielsweise Audiodaten, Einstellungsparameter, andere Daten oder eine Kombination hiervon. Die IDs ID2, ID4 werden jedoch nicht zwingend übertragen und dienen zunächst dem internen Vergleich. Die jeweilige Schnittstelle 14 weist üblicherweise eine begrenzte Reichweite auf, z.B. maximal 10 m, sodass eine Kopplung automatisch lediglich in einem räumlich begrenzten Umfeld des jeweiligen Hörgeräts 2, 16 durchgeführt wird.

Die zweite akustische ID ID2 ist im zweiten Hörgerät 16 entweder bereits in einem Speicher 18 hinterlegt oder wird im Rahmen des Verfahren beispielsweise von dem zweiten Hörgerät 16 selbst erzeugt. Sofern die zweite ID ID2 während des Verfahrens erzeugt wird, erfolgt dies beispielsweise dann, wenn die Kopplungsanfrage K1 empfangen wird oder wenn eine Stimme in der Umgebung erkannt wird. Beide Ausgestaltungen sind auch kombinierbar.

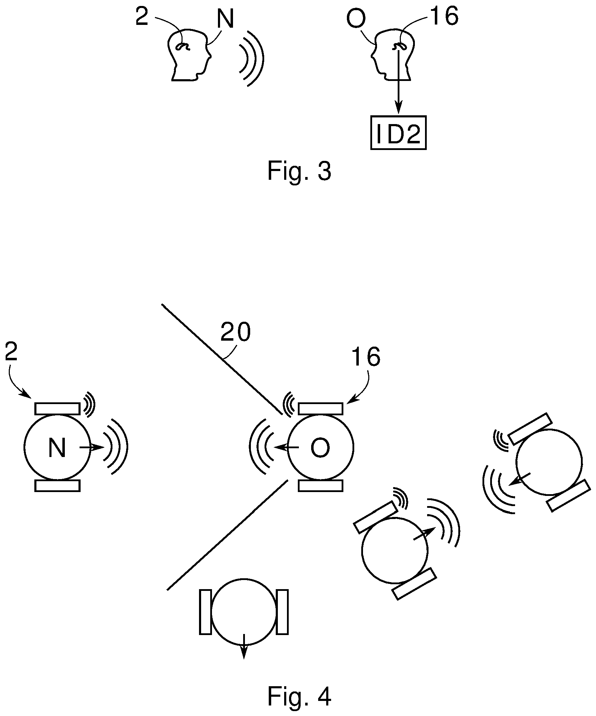

In der gezeigten Ausgestaltung weist das zweite Hörgerät 16 wie in Fig. 1 gezeigt ein Mikrofon 8 auf und nimmt mit diesem auch eine Stimme aus der Umgebung auf und erzeugt daraus die zweite akustische ID ID2. Dies ist beispielhaft in Fig. 3 illustriert. Die Stimme ist zunächst eine beliebige Stimme in der Umgebung, jedoch nicht die Stimme des zweiten Nutzers O. Entsprechend ist die Stimme, welche vom zweiten Hörgerät 16 aufgenommen wird eine fremde Stimme, d.h. entweder wie in Fig. 3 tatsächlich die Stimme des ersten Nutzers N, sofern dieser in Reichweite des Mikrofons 8 ist, oder eine andere Stimme. Wesentlich ist dabei, dass das zweite Hörgerät 16 die Umgebung nach Stimmen anderer Nutzer N absucht. Sobald eine Stimme gefunden wird, wird hiervon zweckmäßigerweise direkt eine akustische ID ID2 erzeugt, zur späteren Verwendung beim Koppeln. Vorliegend wird diese fremde ID ID2 im auch im Speicher 18 gespeichert. Dadurch sammelt ein jeweiliges Hörgerät 2, 16 mit der Zeit mehrere fremde IDs ID2, welche dann wie in Fig. 2 gezeigt mit einer gegebenenfalls empfangenen ID ID1 verglichen werden. Der in Fig. 3 gezeigte Schritt ist in einer möglichen Ausgestaltung ein Teil des in Fig. 2 gezeigten Verfahrens.

Aus den Fig. 2 und 3 ergibt sich, dass zwei unterschiedliche Übertragungskanäle zur Identifikation eines Nutzers N verwendet werden. Einerseits übermittelt das erste Hörgerät 2 eine ID ID1 des ersten Nutzers N über eine Signalstrecke, indem die erste ID ID1 über die Schnittstelle 14 als elektromagnetisches Signal an andere Hörgeräte 16 in der Umgebung gesendet wird. Andererseits erzeugt das zweite Hörgerät 16 eine ID ID2 eines Nutzers N über eine Luftstrecke, indem die Stimme dieses Nutzers N als akustisches Signal mit einem Mikrofon 8 aufgenommen wird und dann die zweite akustische ID ID2 erzeugt wird. Das zweite Hörgerät 16 vergleicht schließlich die beiden IDs ID1, ID2, welche aus unterschiedlichen Übertragungskanälen gewonnen wurden, um den ersten Nutzer N zu identifizieren. Eine Interaktion der Nutzer N, O ist hierbei nicht notwendig und erfolgt vorliegend auch nicht, vielmehr wird das gesamte Verfahren automatisch von den Hörgeräten 2, 16 durchgeführt. Anstatt die zweite ID2 während des Verfahrens direkt zu bestimmen, ist in einer nicht explizit gezeigten Ausgestaltung die ID2 im Speicher 18 des Hörgeräts 16 hinterlegt. Wichtig ist dabei allerdings, dass die ID2 aus der Stimme des ersten Nutzers N erzeugt wurde, damit dieser entsprechend identifizierbar ist.

Nachdem die beiden Hörgeräte 2, 16 miteinander gekoppelt worden sind, ist ein Datenaustausch möglich. In der hier beschriebenen Ausgestaltung werden beim Datenaustausch die Stimmen der Nutzer N, O übertragen, sodass eine Funkverbindung ausgebildet ist. Mit anderen Worten: ein jeweiliges Hörgerät 2,16 nimmt mit seinem Mikrofon 8 die Stimme des eigenen Nutzers N, O auf. Das Mikrofon 8 erzeugt ein entsprechendes Audiosignal, welches je nach Ausgestaltung noch zusätzlich bearbeitet wird oder nicht und dann über die Schnittstelle 14 an das andere Hörgerät 2, 16 übermittelt wird. Dies ist in Fig. 1 nicht explizit dargestellt, geeignet ist aber beispielsweise eine Übertragung des Eingangssignals E mittels der Schnittstelle 14. Das andere Hörgerät 2, 16 empfängt die Stimme des nun anderen Nutzers N, O und wandelt diese mittels des Hörers 12 wieder in Schall um, zur Ausgabe an den eigenen Nutzer N, O.

Das Aussenden der Kopplungsanfrage K1 mit der ersten, eigenen ID ID1 ist an sich unabhängig von der Anwesenheit des zweiten und generell eines anderen Nutzers O. Vorliegend wird jedoch die Kopplungsanfrage K1 lediglich dann ausgesendet, wenn das erste Hörgerät 2 erkennt, dass ein zweites Hörgerät 16 in Reichweite ist. Hierzu sendet das erste Hörgerät 2 die erste akustische ID ID1 aus, wenn das erste Hörgerät 2 eine Gesprächssituation erkennt. Unter einer Gesprächssituation wird vorliegend verstanden, dass wenigstens zwei Nutzer N, O z.B. wie in Fig. 3 gezeigt miteinander sprechen, typischerweise wechselseitig. Wenn also das erste Hörgerät 2 die Anwesenheit eines anderen Nutzers O in der Umgebung erkennt, dann wird hierdurch der Anfragemodus aktiviert und die erste, eigene ID ID1 ausgesendet. Dadurch wird sichergestellt, dass die erste ID ID1 nur dann ausgesendet wird, wenn auch tatsächlich ein potentieller Kopplungspartner vorhanden ist.

Um die Anwesenheit eines anderen Nutzers N, O zu erkennen, ist ein jeweiliges Hörgerät 2, 16 vorliegend ausgebildet, eine fremde Stimme zu erkennen. Hierzu werden vorliegend ebenfalls das jeweilige Mikrofon 8 und die jeweilige Stimmanalyseeinheit 6 verwendet. Mit dem Mikrofon 8 nimmt das Hörgerät 2, 16 Schall aus der Umgebung auf, erzeugt daraus ein Eingangssignal E und führt dieses der Stimmanalyseeinheit 6 zu. Diese erkennt dann, ob eine fremde Stimme in der Umgebung vorhanden ist oder nicht. Hierzu wird beispielsweise zunächst eine Stimme aus dem Schall extrahiert und hiervon eine akustische ID ID2 erzeugt. Diese wird dann beispielsweise mit der akustischen ID ID1 des dem Hörgerät 2 zugeordneten Nutzers N, d.h. der eigenen ID, verglichen. Die eigene ID ist beispielsweise im Speicher 18 des Hörgeräts 2 gespeichert oder wird von diesem erzeugt, beispielsweise ebenfalls mit der Stimmanalyseeinheit 6.

Möglicherweise sind aber mehrere fremde Stimmen vorhanden und nicht mit allen der zugehörigen Nutzern N, O soll ein Gespräch erfolgen. Mit anderen Worten: möglicherweise ist die Gesprächssituation auf eine Teilmenge von Nutzern N, O in der Umgebung beschränkt. Typischerweise besteht eine Gesprächssituation nur mit solchen fremden Nutzern O, welche frontal zum Nutzer N positioniert sind, sich diesem also gegenüber befinden. Dies ist beispielhaft in Fig. 4 gezeigt. Dort nimmt das zweite Hörgerät 16 für die zweite akustische ID ID2 eine Stimme lediglich aus einem Teilbereich 20 der Umgebung auf, nämlich aus einem Teilbereich 20, in welchem sich potentiell ein Gesprächspartner des zweiten Nutzers O aufhält. Dieser Teilbereich 20 ist in Fig. 4 ein bezüglich des zweiten Nutzers O vorderes Raumviertel. In einer nicht gezeigten Ausgestaltung ist der Teilbereich 20 eine Richtkeule eines Beamformers des Hörgeräts 16. Insgesamt erfolgt also die Kopplung der Hörgeräte 2, 16 somit richtungsabhängig.

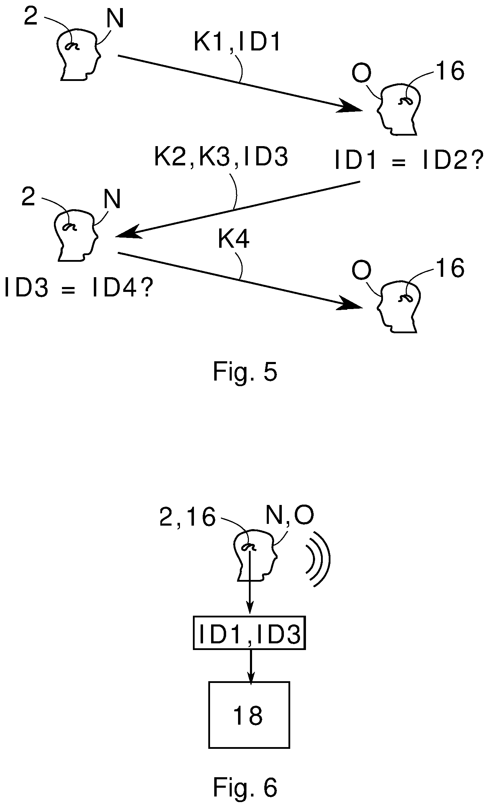

Eine erfolgreiche Kopplung der beiden Hörgeräte bedingt das Aussenden der Kopplungsanfrage K1 durch das erste Hörgerät 2, deren Empfang durch das zweite Hörgerät 16 und umgekehrt das Aussenden der Kopplungsannahme K2 durch das zweite Hörgerät 16 und deren Empfang durch das erste Hörgerät 2, wie auch aus Fig. 2 deutlich wird. Damit ist zumindest der erste Nutzer N identifiziert. In Fig. 5 ist analog zur Darstellung in Fig. 2 eine Variante gezeigt, bei welcher für die Kopplung dieselben Schritte zusätzlich auch umgekehrt ausgeführt werden, um analog auch den zweiten Nutzer O zu identifizieren. Im gezeigten Ausführungsbeispiel enthält die Kopplungsannahme K2 des zweiten Hörgeräts 16 hierzu eine Kopplungsanfrage K3 an das erste Hörgerät 2. Diese Kopplungsanfrage K3 umfasst eine eigene akustische ID ID3 des zweiten Nutzers O, welche - analog zur ersten ID ID1 - vom ersten Hörgerät 2 empfangen wird und - analog zur zweiten ID ID2 - mit einer gespeicherten fremden akustischen ID ID4 verglichen wird. Die Ausführungen zur Fig. 3 sind entsprechend umgekehrt anwendbar, sodass hierzu analog die ID4 vom ersten Hörgerät 2 aus der Stimme des Nutzers O erzeugt wird. Die Hörgeräte 2, 16 führen also insgesamt einen wechselseitigen Vergleich der IDs ID1, ID3 der beiden Nutzer N, O aus. Das erste Hörgerät 2 sendet dann an das zweite Hörgerät 16 ebenfalls eine Kopplungsannahme K4, falls die akustische ID ID3 des zweiten Nutzers 2 mit der gespeicherten akustischen ID ID4 übereinstimmt. In einer Ausgestaltung wird die gespeicherte akustische ID ID4 mit der Stimmanalyseeinheit 6 aus Schall der Umgebung erzeugt, wie oben bereits beschrieben wurde.

Die Ausführungsform gemäß Fig. 2 findet beispielsweise Anwendung in einer Situation, in welcher sich zwei Nutzer N, O mit je einem Hörgerät 2, 16 einander annähern und beginnen, sich miteinander zu unterhalten. Das erste Hörgerät 2 erkennt mittels des Mikrofons 8, dass ein anderer Nutzer O in der Umgebung vorhanden ist und auch spricht. Dieses erste Hörgerät 2 sendet daher die akustische ID ID1 seines eigenen Nutzers N aus. Diese erste ID ID1 wird von dem zweiten Hörgerät 16 über dessen Schnittstelle 14 empfangen. Das zweite Hörgerät 16 nimmt nun seinerseits mittels dessen Mikrofon 8 Schall aus der Umgebung auf und extrahiert die Stimme des ersten Nutzers N. Aus dieser Stimme wird eine akustische ID ID2 erzeugt, welche in der beschriebenen Konstellation gerade wie die erste akustische ID ID1 eine ID des ersten Nutzers N ist. Beim Vergleich der beiden IDs ID1, ID2, d.h. der selbst erzeugten ID ID2 einerseits und der empfangenen ID ID1 andererseits, stellt nun das zweite Hörgerät 16 fest, dass die IDs ID1, ID2 übereinstimmen und dass also das Hörgerät 2 des ersten Nutzers N zur Kopplung bereit ist. Auf diese Feststellung hin übersendet das zweite Hörgerät 16 an das erste Hörgerät die Kopplungsannahme K2, mit deren Empfang durch das erste Hörgerät 2 dann die Kopplung erfolgt. Alternativ erfolgt die Kopplung wie in Fig. 5 gezeigt erst, nachdem umgekehrt auch das zweite Hörgerät 16 eine selbst erzeugte ID ID3 des zweiten Nutzers O an das erste Hörgerät 2 übersendet hat und diese von dem ersten Hörgerät 2 mit einer von diesem erzeugten ID ID4 des zweiten Nutzers O erfolgreich verglichen worden ist. Diese ID ID4 wird vom ersten Hörgerät 2 beispielsweise dadurch erzeugt, dass das erste Hörgerät 2 mittels dessen Mikrofon 8 analog zum zweiten Hörgerät 16 in Fig. 2 Schall aus der Umgebung aufnimmt und auf Stimmen untersucht.

Die jeweilige akustische ID ID1, ID2, ID3, ID4 wird vorliegend basierend auf wenigstens einem Stimmparameter einer jeweiligen Stimme erzeugt und ist hierbei ausgewählt aus einer Menge von Stimmparametern, umfassend: Vokaltraktfrequenz, Lautstärke, Stimmfrequenz, Stimmanstieg, auch als Pitch bezeichnet, Geschwindigkeit, Frequenzbereich, Atmungsfrequenz, Ruhepegel, von Vokal- und Konsonantenwechsel. Grundsätzlich ist die Verwendung eines einzelnen Stimmparameters bereits ausreichend, zweckmäßiger ist jedoch eine Kombination mehrerer Stimmparameter bei der Erzeugung einer ID ID1, ID2, ID3, ID4.

Sämtliche der genannten Stimmparameter lassen sich auf einfache Weise aus dem Eingangssignal E des Mikrofons 8 des jeweiligen Hörgeräts 2, 16 ermitteln, beispielsweise mittels einer Pegel-, Frequenz-, Spektral-, oder Zeitbereichsanalyse, welche jeweils beispielsweise ein Bestandteil der Steuereinheit 4 des jeweiligen Hörgeräts 2, 16 sind. Wie die einzelnen Stimmparameter konkret bestimmt werden, ist dabei von untergeordneter Bedeutung.

Die erste ID ID1, welche von dem ersten Hörgerät 2 als Kopplungsanfrage K1 ausgesendet wird, ist beispielsweise im Speicher 18 des ersten Hörgeräts 2 gespeichert. Analog die eigene akustische ID ID3 des zweiten Nutzers O, welche mit der Kopplungsanfrage K3 ausgesendet wird, beispielsweise im Speicher 18 des zweiten Hörgeräts 16 gespeichert. Diese IDs ID1, ID3 werden in einer möglichen Ausgestaltung im Rahmen eines nicht explizit gezeigten Kalibrierverfahrens bestimmt und dann gespeichert. Alternativ oder zusätzlich werden diese beiden eigenen IDs ID1, ID3 von dem jeweiligen Hörgerät 2, 16 erzeugt, indem dieses wie beispielhaft in Fig. 6 gezeigt die eigene Stimme des jeweiligen eigenen Nutzers N, O aufnimmt. Dabei misst das Hörgerät 2, 16 auch einen oder mehrere Stimmparameter und erzeugt daraus dann die ID ID1, ID3 des eigenen Nutzers N, O. Diese wird in Fig. 6 auch zur späteren, erneuten Verwendung im Speicher 18 des Hörgeräts 2, 16 gespeichert, dies ist jedoch an sich lediglich optional.

In den gezeigten Ausführungsbeispielen wird die jeweilige fremde akustische ID ID1, ID2, ID3, ID4 in einer Kontaktdatenbank 22 des jeweiligen Hörgeräts 2, 16 gespeichert. Die Kontaktdatenbank 22 ist somit eine Art Telefonbuch und ermöglicht eine einfachere Kopplung bei einer wiederholten Kopplung der Nutzer N, O. Die akustische ID ID2, ID4 muss dann nicht jedes Mal erneut mittels des Mikrofons 8 und der Stimmanalyseeinheit 6 erzeugt werden, sondern die in der Kontaktdatenbank 22 gespeicherten IDs ID1, ID2, ID3, ID4 werden direkt mit einer empfangenen ID ID1, ID3 verglichen, um einen Nutzer O, N zu identifizieren. Im Ausführungsbeispiel der Fig. 1 ist die Kontaktdatenbank 20 ein Teil des Speichers 18.

### Bezugszeichenliste

- 2: Hörgerät, erstes Hörgerät
- 4: Steuereinheit
- 6: Stimmanalyseeinheit
- 8: Mikrofon
- 10: Signalverarbeitung
- 12: Hörer
- 14: Schnittstelle
- 16: zweites Hörgerät
- 18: Speicher
- 20: Teilbereich
- 22: Kontaktdatenbank
- A: Ausgangssignal
- E: Eingangssignal
- ID1, ID2, ID3, ID4: akustische ID
- K1: Kopplungsanfrage
- K2: Kopplungsannahme
- K3: Kopplungsanfrage
- K4: Kopplungsannahme
- N, O: Nutzer

## Patentansprüche

1. Verfahren,
- wobei ein erstes Hörgerät (2) einem ersten Nutzer (N) zugeordnet ist und ein zweites Hörgerät (16) einem anderen, zweiten Nutzer (O),
- wobei das erste Hörgerät (2) als eine Kopplungsanfrage (K1) eine erste akustische ID (ID1) einer Stimme des ersten Nutzers (N) aussendet,
- wobei das zweite Hörgerät (16) die erste akustische ID (ID1) empfängt und mit einer zweiten akustischen ID (ID2) vergleicht,
- wobei das zweite Hörgerät (16) eine Kopplungsannahme (K2) aussendet, falls die erste akustische ID (ID1) mit der zweiten akustischen ID (ID2) übereinstimmt, sodass das erste Hörgerät (2) mit dem zweiten Hörgerät (16) gekoppelt wird, zum Datenaustausch zwischen diesen beiden Hörgeräten (2, 16).

2. Verfahren nach Anspruch 1,
wobei das zweite Hörgerät (16) ein Mikrofon (8) aufweist und mit diesem eine Stimme aus der Umgebung aufnimmt und daraus die zweite akustische ID (ID2) erzeugt.

3. Verfahren nach einem der Ansprüche 1 oder 2,
wobei beim Datenaustausch die Stimmen der Nutzer (N, O) übertragen werden.

4. Verfahren nach einem der Ansprüche 1 bis 3,
wobei das erste Hörgerät (2) die erste akustische ID (ID1) aussendet, wenn das erste Hörgerät (2) eine Gesprächssituation erkennt.

5. Verfahren nach einem der Ansprüche 1 bis 4,
wobei das zweite Hörgerät (16) für die zweite akustische ID (ID2) eine Stimme lediglich aus einem Teilbereich (20) der Umgebung aufnimmt, nämlich aus einem Teilbereich (20), in welchem sich potentiell ein Gesprächspartner des zweiten Nutzers (N, O) aufhält.

6. Verfahren nach einem der Ansprüche 1 bis 5,
wobei die Kopplungsannahme (K2) eine Kopplungsanfrage (K3) an das erste Hörgerät (2) enthält, welche eine akustische ID (ID3) des zweiten Nutzers (O) umfasst, welche vom ersten Hörgerät (2) empfangen wird und mit einer gespeicherten akustischen ID (ID4) verglichen wird,
wobei das erste Hörgerät (2) an das zweite Hörgerät (16) eine Kopplungsannahme (K4) aussendet, falls die akustische ID (ID3) des zweiten Nutzers (O) mit der gespeicherten akustischen ID (ID4) übereinstimmt.

7. Verfahren nach einem der Ansprüche 1 bis 6,
wobei die jeweilige akustische ID (ID1, ID2, ID3, ID4) basierend auf wenigstens einem Stimmparameter einer jeweiligen Stimme erzeugt wird und hierbei ausgewählt ist aus einer Menge von Stimmparametern, umfassend: Vokaltraktfrequenz, Lautstärke, Stimmfrequenz, Stimmanstieg, Geschwindigkeit, Frequenzbereich, Atmungsfrequenz, Ruhepegel, von Vokal- und Konsonantenwechsel.

8. Verfahren nach einem der Ansprüche 1 bis 7,
wobei die erste akustische ID (ID1) in einem Speicher (18) des ersten Hörgeräts (2) gespeichert ist.

9. Verfahren nach einem der Ansprüche 1 bis 8,
wobei die erste akustische ID (ID1) von dem ersten Hörgerät (2) erzeugt wird, indem dieses die eigene Stimme des ersten Nutzers (N) aufnimmt

10. Verfahren nach einem der Ansprüche 1 bis 9,
wobei die jeweilige akustische ID (ID1, ID2, ID3, ID4) in einer Kontaktdatenbank (22) des jeweiligen Hörgeräts (2, 16) gespeichert wird.

11. Verfahren nach einem der Ansprüche 1 bis 10,
wobei das erste und das zweite Hörgeräte (2, 16) für den Datenaustausch jeweils eine Drahtlosschnittstelle (14) aufweisen, insbesondere eine Bluetooth-Schnittstelle.

12. Erstes Hörgerät (2) und zweites Hörgerät (16), welche ausgebildet sind zur Durchführung eines Verfahrens gemäß einem der Ansprüche 1 bis 11.

## Claims

1. Method,
- wherein a first hearing device (2) is associated with a first user (N) and a second hearing device (16) is associated with another, second user (O),
- wherein the first hearing device (2) transmits a first acoustic ID (ID1) of a voice of the first user (N) as a coupling request (K1),
- wherein the second hearing device (16) receives the first acoustic ID (ID1) and compares it with a second acoustic ID (ID2),
- wherein the second hearing device (16) transmits a coupling acceptance (K2) if the first acoustic ID (ID1) matches the second acoustic ID (ID2), with the result that the first hearing device (2) is coupled to the second hearing device (16) for the purpose of data interchange between these two hearing devices (2, 16).

2. Method according to Claim 1,
wherein the second hearing device (16) has a microphone (8) and uses said microphone to record a voice from the surroundings and generates the second acoustic ID (ID2) therefrom.

3. Method according to either of Claims 1 and 2, wherein the voices of the users (N, O) are transmitted during the data interchange.

4. Method according to any one of Claims 1 to 3, wherein the first hearing device (2) transmits the first acoustic ID (ID1) when the first hearing device (2) detects a conversation situation.

5. Method according to any one of Claims 1 to 4, wherein for the second acoustic ID (ID2) the second hearing device (16) records a voice only from a subregion (20) of the surroundings, namely from a subregion (20) in which a conversation partner of the second user (N, O) is potentially present.

6. Method according to any one of Claims 1 to 5, wherein the coupling acceptance (K2) contains a coupling request (K3) to the first hearing device (2) comprising an acoustic ID (ID3) of the second user (O), which is received by the first hearing device (2) and compared with a stored acoustic ID (ID4),
wherein the first hearing device (2) transmits a coupling acceptance (K4) to the second hearing device (16) if the acoustic ID (ID3) of the second user (O) matches the stored acoustic ID (ID4).

7. Method according to any one of Claims 1 to 6,
wherein the respective acoustic ID (ID1, ID2, ID3, ID4) is generated based on at least one voice parameter of a respective voice and is selected from a set of voice parameters, comprising: vocal tract frequency, volume, voice frequency, voice increase, speed, frequency range, respiration rate, resting level, of vowel and consonant changes.

8. Method according to any one of Claims 1 to 7,
wherein the first acoustic ID (ID1) is stored in a memory (18) of the first hearing device (2) .

9. Method according to any one of Claims 1 to 8,
wherein the first acoustic ID (ID1) is generated by the first hearing device (2) by virtue of the latter recording the first user's (N) own voice.

10. Method according to any one of Claims 1 to 9,
wherein the respective acoustic ID (ID1, ID2, ID3, ID4) is stored in a contact database (22) of the respective hearing device (2, 16).

11. Method according to any one of Claims 1 to 10,
wherein the first and second hearing devices (2, 16) each have a wireless interface (14) for data interchange, in particular a Bluetooth interface.

12. First hearing device (2) and second hearing device (16), which are designed to carry out a method according to any one of Claims 1 to 11.

## Revendications

1. Procédé selon lequel
- une première prothèse auditive (2) est associée à un premier utilisateur (N) et une deuxième prothèse auditive (16) est associée à un autre deuxième utilisateur (O),
- la première prothèse auditive (2) émet un premier identifiant acoustique (ID1) d'une voix du premier utilisateur (N) en tant que requête de couplage (K1),
- la deuxième prothèse auditive (16) reçoit le premier identifiant acoustique (ID1) et le compare à un deuxième identifiant acoustique (ID2),
- la deuxième prothèse auditive (16) émet une acceptation de couplage (K2) si le premier identifiant acoustique (ID1) correspond au deuxième identifiant acoustique (ID2) de manière à ce que la première prothèse auditive (2) soit couplée à la deuxième prothèse auditive (16) en vue de l'échange de données entre ces deux prothèses auditives (2, 16).

2. Procédé selon la revendication 1,
la deuxième prothèse auditive (16) comportant un microphone (8) et enregistrant avec celui-ci une voix de l'environnement et générant à partir de celle-ci le deuxième identifiant acoustique (ID2).

3. Procédé selon l'une des revendications 1 ou 2,
les voix des utilisateurs (N, O) étant transmises lors de l'échange de données.

4. Procédé selon l'une des revendications 1 à 3,
la première prothèse auditive (2) émettant le premier identifiant acoustique (ID1) lorsque la première prothèse auditive (2) reconnaît une situation de conversation.

5. Procédé selon l'une des revendications 1 à 4,
la deuxième prothèse auditive (16) destinée au deuxième identifiant acoustique (ID2) enregistrant une voix uniquement d'une sous-zone (20) de l'environnement, à savoir d'une sous-zone (20) dans laquelle se trouve potentiellement un interlocuteur du deuxième utilisateur (N, O).

6. Procédé selon l'une des revendications 1 à 5, l'acceptation de couplage (K2) contenant une requête de couplage (K3) qui est faite à la première prothèse auditive (2) et qui comprend un identifiant acoustique (ID3) du deuxième utilisateur (O) qui est reçu par la première prothèse auditive (2) et comparé à un identifiant acoustique mémorisé (ID4), la première prothèse auditive (2) transmettant une acceptation de couplage (K4) à la deuxième prothèse auditive (16) si l'identifiant acoustique (ID3) du deuxième utilisateur (0) correspond à l'identifiant acoustique mémorisé (ID4) .

7. Procédé selon l'une des revendications 1 à 6, l'identifiant acoustique respectif (ID1, ID2, ID3, ID4) étant généré sur la base d'au moins un paramètre vocal d'une voix respective et étant sélectionné parmi un ensemble de paramètres vocaux comprenant : la fréquence de l'appareil phonatoire, le volume, la fréquence vocale, l'augmentation de la voix, la vitesse, la gamme de fréquences, la fréquence respiratoire, le niveau de repos, des changements de voyelle et de consonne.

8. Procédé selon l'une des revendications 1 à 7,
le premier identifiant acoustique (ID1) étant mémorisé dans une mémoire (18) de la première prothèse auditive (2) .

9. Procédé selon l'une des revendications 1 à 8,
le premier identifiant acoustique (ID1) étant généré par la première prothèse auditive (2) en ce que celle-ci enregistre la propre voix du premier utilisateur (N) .

10. Procédé selon l'une des revendications 1 à 9, l'identifiant acoustique respectif (ID1, ID2, ID3, ID4) étant mémorisé dans une base de données de contacts (22) de la prothèse auditive respective (2, 16).

11. Procédé selon l'une des revendications 1 à 10,
la première et la deuxième prothèse auditive (2, 16) comportant chacune une interface sans fil (14) destinée à l'échange de données, en particulier une interface Bluetooth.

12. Première prothèse auditive (2) et deuxième prothèse auditive (16) qui sont conçues pour mettre en œuvre un procédé selon l'une des revendications 1 à 11.
